# EUROPEAN PATENT APPLICATION

(11) **EP 1 816 186 A1**
(43) Date of publication of application: **08.08.2007**
(21) Application number: 05774542.4
(22) Date of filing: 23.08.2005
(51) Int. Cl.: C12C 11/00

(54) **PROCESS FOR PRODUCING HIGHLY STABLE FERMENTED DRINK**

(30) Priority: 23.08.2004 JP 2004242411
(71) Applicant: SUNTORY LIMITED, Osaka-shi, Osaka 530-8203 (JP)
(72) Inventor: FUJITA, Atsushi, Kumamoto-shi, Kumamoto 8612106 (JP); NISHIDA, Yuji, Ibaraki-shi, Osaka 5670021 (JP); KAWASAKI, Shingo, Fuchu-shi, Tokyo 1830005 (JP); TAKAOKA, Seisuke, Fuchu-shi, Tokyo 1830026 (JP)
(74) Representative: Albrecht, Thomas
(86) International application number: PCT/JP2005/015256
(87) International publication number: WO 2006/022250

(57) **Abstract**

Beer-flavored fermented beverages made from malt or other grains maintain their high quality for a long period of time without changing quality and remain as flavorful as they are immediately after production. Fermented beverages such as beer, happoshu, miscellaneous alcohol beverages and low-alcohol fermented malt beverages having high storage stability are provided by increasing the sulfurous acid concentration in the fermented beverages to 5.0 ppm or above. This is done by adjusting the concentration of free amino nitrogen (FAN value) in wort and other fermentation liquids to 25 mg/100mL or below and adding a mineral source for fermentation.

## Description

### TECHNICAL FIELD

The present invention relates to fermented beverages made from malt and other grains that maintain their high quality for a long period of time and remain as flavorful as they are immediately after production.

### BACKGROUND ART

Fermented beverages such as beer and happoshu (low-malt beer) are made by fermenting fermentation liquids which are made from malt and other grains. Much effort has been devoted to seeking new flavors to create new beverage products that meet the preferences of consumers. Many such products are being introduced into the market. One important concern common to these fermentation beverages is how to prevent changes in the quality of the products after production. Thus, there is a need for a technology to maintain the taste of fermentation beverages and maintain the same high quality of the products as they have immediately after production. A technology is also needed to improve the stability of the flavor of fermentation beverages.

Sulfites are widely used in alcohol beverages such as wines and brandies as stabilizers. The use of the sulfite stabilizers in fermented beverages such as beer and happoshu; however, is not generally accepted by consumers. Thus, development of techniques alternative to stabilization by sulfites addition is needed.

Several approaches to improve the stability of alcohol beverages such as beer and happoshu have been developed to increase the amount of sulfites produced by yeast fermentation to eliminate the need to add sulfite stabilizers to alcohol beverages.

For example, Non-Patent Document 1 reports that the amount of sulfites,produced during fermentation can be varied significantly by varying the concentration of oxygen dissolved in wort at the beginning of the fermentation step.
Also, Patent Document 1 describes an improved technique for alcohol fermentation in which specific mineral-rich yeast is used to promote the growth of yeast.
However, the improved alcohol fermentation technique described in Patent Document 1 is intended to increase the efficiency of fermentation. Nothing is mentioned in the publication about the changes in the concentration of sulfites that serve as the stabilizers of alcohol beverages, nor is any description given of whether sulfites can stabilize the flavor and other qualities of fermented beverages.

Patent Document 1: Published Japanese translation of PCT application No. 2002-516115
Non-Patent Document 1: J. Fermentation & Bioengineering Vol. 73, No. 6, p456-460, 1992

### DISCLOSURE OF THE INVENTION

### PROBLEMS TO BE SOLVED BY THE INVENTION

In view of the above-described problems, it is an objective of the present invention to provide a beer-flavored fermented malt beverage that can maintain for a long period of time the same high quality as it is immediately after production and that can retain its flavor without changing quality.

The present inventors considered that, if a technique could be developed that would increase the production of sulfurous acid by yeast during fermentation, such a technique would eliminate the need to add sulfite stabilizers and enable the production of beer-flavored fermented beverages having stable quality.

From this point of view, the present inventors conducted extensive studies and made a surprising finding that production of sulfurous acid during fermentation can be significantly increased by adding small amounts of mineral sources, in particular zinc, to the fermentation liquid made from malt or other grains.

Sulfurous acid is produced during fermentation in amounts too small to affect the flavor of the fermented beverages, but large enough to contribute to the stability of product quality. Thus, this approach provides a highly effective stabilization technique.

In an effort to determine the optimum amount of sulfurous acid that contributes to the stabilization of fermented beverages, the present inventors further analyzed different factors that affect the amount of sulfurous acid produced during fermentation and established a technique for effectively increasing the concentration of sulfurous acid.

Specifically, the present inventors found that the concentration of sulfurous acid after fermentation can be increased, for example, by adjusting the concentration of free amino nitrogen (FAN) in wort or other fermentation liquids used in the fermentation step.

Consequently, the present inventors reached the conclusion that these approaches may be used either individually or in combination to ensure the stability of the flavor of beer-flavored beverages etc. Hence, the present inventors devised the present invention.

### MEANS FOR SOLVING THE PROBLEMS

One aspect of the present invention provides a process for producing a fermented beverage. Specifically, this aspect of the present invention comprises the following:
(1) A process for producing a fermented beverage by fermentation of a fermentation liquid, wherein a concentration of free amino nitrogen (FAN value) in the fermentation liquid is adjusted to 25 mg/100mL or below and a mineral source is added to the fermentation liquid.
(2) The process according to (1), wherein the FAN value in the fermentation liquid is adjusted to 5 to 20 mg/100mL.
(3) The process according to (1), wherein a concentration of the mineral source in the fermentation liquid is 0.1 to 1.0 ppm.
(4) The process according to (1), wherein the mineral source is zinc or a salt thereof.
(5) The process according to (1), wherein the mineral source is zinc-containing yeast or a processed product thereof.
(6) The process according to (1) to (5), wherein a concentration of sulfurous acid in the fermented beverage is increased.
(7) The process according to (6), wherein the concentration of sulfurous acid is 5.0 ppm or above.
(8) The process according to (1) to (5), wherein a proportion of grains serving as a carbon source contained in the fermentation liquid is 50% or less.
(9) The process according to (1), wherein the fermented beverage is a beer-flavored fermented beverage.
(10) The process according to (9), wherein the beer-flavored fermented beverage is beer, happoshu, miscellaneous alcohol beverage or low-alcohol fermented malt beverage.

Another aspect of the present invention provides a process for increasing a concentration of sulfurous acid in a fermented beverage. Specifically, this aspect of the present invention comprises the following:
(11) A process for increasing a concentration of sulfurous acid in a fermented beverage produced by fermentation, wherein a mineral source is added.
(12) The process according to (11), wherein a concentration of free amino nitrogen (FAN value) in a fermentation liquid is adjusted to 25 mg/100mL or below.
(13) The process according to (12), wherein the FAN value in the fermentation liquid is adjusted to 5 to 20 mg/100mL.
(14) The process according to (11), wherein the concentration of the mineral source in the fermentation liquid is 0.1 to 1.0 ppm.
(15) The process according to (11), wherein the mineral source is zinc or a salt thereof.
(16) The process according to (11), wherein the mineral source is zinc-containing yeast or a processed product thereof.
(17) The process according to (11), wherein the concentration of sulfurous acid is 5.0 ppm or above.
(18) The process according to (11), wherein a proportion of grains serving as a carbon source contained in the fermentation liquid is 50% or less.
(19) The process according to (11), wherein the fermented beverage is a beer-flavored fermented beverage.
(20) The process according to (19), wherein the beer-flavored fermented beverage is beer, happoshu, miscellaneous alcohol beverage or low-alcohol malt fermented beverage.

Still another aspect of the present invention provides a fermentation beverage obtained by the above-described processes. Specifically, this aspect of the present invention comprises the following:
(21) A fermented beverage produced by the process according to (1) to (10) above, wherein a concentration of sulfurous acid is 5.0 ppm or above.

### ADVANTAGES OF THE INVENTION

According to the present invention, there is provided a beer-flavored fermented beverage having high storage stability. In particular, by adjusting the FAN value in a fermentation liquid such as wort, and adding a mineral source to the fermentation liquid, the production of sulfurous acid in the resulting fermented beverage can be increased. The presence of sulfurous acid increases the flavor stability of the fermented beverage.

### BEST MODE FOR CARRYING OUT THE INVENTION

As used herein, the terms "fermentation beverage" provided by the present invention and "beer-flavored beverage" both refer to beverage products that are made by yeast fermentation of sugar sources, such as malt and sugar solutions, and hops and have beer flavor. Specific examples of these beverages include beer, happoshu, miscellaneous alcohol beverages and low-alcohol fermented malt beverages (fermented malt beverages containing alcohol in an amount of less than 1%).

The mineral source to be added to the raw materials in the present invention includes zinc, iron and magnesium. Of these, zinc is particularly preferred. These mineral sources may be added as a free form, as a salt, or as yeast or a processed yeast product (e.g., dried yeast product) containing the minerals at high concentrations. One example of such yeast products is a commercial product "Servomyces" manufactured by Lallemand Inc.

The mineral sources may be added in any suitable amounts. For example, a free form of the mineral source may be dissolved in wort and other fermentation liquids at a concentration of 0.1 to 1 ppm, preferably at a concentration of 0.1 to about 0.5 ppm.
When present at concentrations of less than 0.1 ppm, the mineral source may not provide the desired effects, whereas the mineral source present at concentrations of more than 1 ppm may not provide correspondingly increased effects, but rather may have adverse effects.

The term "fermentation liquid" as used herein refers to a liquid that contains necessary ingredients for fermentation and is not yet subjected to the fermentation step. One example is wort.
For convenience, malt- or barley or wheat-free fermentation liquids may also be referred to as "wort" in the present invention.

What is meant herein by the term " concentration of free amino nitrogen (FAN value) in wort and other fermentation liquids" is the total amount of free alpha-amino acids.
The present invention revealed that the FAN value, or the total amount of the free alpha-amino acids, affects the production of sulfurous acid during fermentation and the stability of resulting fermented beverages. Too high FAN value in wort and other fermentation liquids leads to a distinctive stale flavor even if the concentration of sulfurous acid is sufficiently high as a result of the addition of the minerals.
For this reason, it is important in the present invention to adjust the FAN value in wort and other fermentation liquids. While the FAN value in wort and other fermentation liquids may be adjusted to any value that can ensure required stability of the beverages, it is typically 25 mg/100mL or less and preferably in the range of 5 to 20 mg/100mL.

According to the present invention, the FAN value in wort and other fermentation liquids may be adjusted by any suitable technique. For example, the FAN value can be controlled by adjusting the amount of amino acids, yeast extracts and other nitrogen sources added to wort and other fermentation liquids.

The FAN value in wort and other fermentation liquids can also be controlled by controlling the degree of protein breakdown during the mashing step (saccharification step). The degree of protein breakdown during the mashing step can be controlled by adjusting the pH, temperature and time of the mashing step. For example, proteases that break down proteins act at a temperature of 45 to 60°C and lose their activity at approximately 80°C. Low molecular weight-nitrogen compounds increase significantly at temperatures of 45 to 50°C, resulting in an increase in the FAN value. The degree of protein breakdown depends also on the length of the time of the process. pH is another factor that influences the protein breakdown. Protein breakdown is facilitated when the mashing step is carried out at a pH of 5 to 6. The pH of wort and other fermentation liquids can be adjusted by the addition of acids.

The FAN value in wort and other fermentation liquids can be controlled by adjusting the type and amount of materials that serve as a carbon source.

As used herein, the term "materials that serve as a carbon source" refers to materials that serve as a carbon source for fermentation. Among such materials are those that are saccharified to make a carbon source, including malt, grains (such as barley, wheat and rice) and corn starches, and various sugar materials that can be directly assimilated by yeast without saccharification, including saccharified starches and sugar syrups.

Since controlling the FAN value is a key factor in the present invention, the materials to serve as a carbon source are divided into two groups, grain materials and sugar materials, depending on whether they can also serve as a nitrogen source.

The grain materials are those that can serve both as a carbon source and a nitrogen source. Examples include malt and grains such as barley, wheat, rice, corn, kaoliang and potato.

The sugar materials are those that can serve as a carbon source, but do not substantially serve as a nitrogen source. Examples include corn starches, saccharified starches and sugar solutions.

Based on this classification, a beer-flavored beverage composed of 40% malt and 60% corn starch can be considered to be composed of 40% grain material and 60% sugar material. In other words, the proportion of the grain material in total carbon source is 40%.

The above-described grain materials are a rich source of various amino acids and proteins and, when used in large proportions, lead to an increase in the FAN value in the resulting wort and other fermentation liquids. Conversely, the FAN value decreases when the sugar materials are used in large proportions.

According to the present invention, the proportion of the grain material in the total carbon source is typically 75% or less, preferably 50% or less, since too high FAN value may lead to a distinctive foul smell.

According to the present invention, the FAN value in wort and other fermentation liquids can be controlled by adjusting the proportions of the grain material and the sugar material used. This technique is advantageous in that the conditions for the mashing step do not need to be considered and the addition of other nitrogen sources, such as amino acids and yeast extracts, is not necessary.

Any yeast may be selected and used in the present invention depending on the type of the product, the desired flavor and the conditions for fermentation. The present invention thus permits a wide range of conditions for the production of beer-flavored beverages, including the use of yeast that can produce a favorable flavor, but can only make unstable products (i.e., low ability to produce sulfurous acid).

While the beer-flavored fermented beverage provided in accordance with the present invention may contain alcohol in any desirable amount, it preferably contains alcohol in an amount of 1 to 15% (v/v). The alcohol content is more preferably in the range of 3 to 8% (v/v), concentrations suitable for making fermented malt beverages, such as beer and happoshu, favored by consumers.

### Examples

The present invention will now be described in further detail with reference to Examples and Comparative Examples.
Unless otherwise specified, test results for each example are evaluated by the following methods and are presented in the accompanying tables.
The FAN values were measured by the TNBS method (Methods of Analysis of the ASBC (1987), Method Beer-31).
The FAN values in the tables are all given in mg/100mL.

The concentration of sulfurous acid was measured by a known distillation technique (Analytica-EBC, 1998.9.25.1).

A sensory test was conducted in the following manner: A panel of five trained tasters was given samples that were pre-exposed to a deterioration load. Each taster was asked to score the degree of stale flavor on the following scale of 1 to 4.
The samples were kept at a temperature of about 5°C during the sensory test.

| | |
|---|---|
| No smell: | 0 point |
| Slight smell: | 1 point |
| Moderate smell: | 2 points |
| Strong smell: | 3 points |

### Example 1: Effects of addition of zinc on the sulfurous acid

### production

Different worts were prepared by using a mixture of 25% malt and 75% sugar solution. Zinc sulfate was added to each wort so that the finished worts contained zinc at concentrations of 0.1 ppm (Invention Product 1) and 0.55 ppm (Invention Product 2), respectively. (Each had FAN value of 10.)
Hop was then added to each wort. Using a common technique, the worts were fermented by a commercially available beer yeast (Weihenstephan-34) to make two types of beer-flavored fermented malt beverage.
As a control, a zinc-free beer-flavored beverage was also prepared. The beverage was prepared in the same manner as the above-described beverages except that no zinc was added (Control Product 1).
The concentration of sulfurous acid in each of the beer-flavored beverages was measured. Each beverage was then packaged in a bottle and was stored at 28°C for one month. After the storage period, the beverages were subjected to a sensory test as described above.
The results are summarized in Table 1.

**(Table 1)**

| | Control Product | Invention Product 1 | Invention Product 2. |
|---|---|---|---|
| Amount of zinc (ppm) | 0.0 | 0.05 | 0.5 |
| Zinc conc. in wort (ppm) | 0.05 | 0.10 | 0.55 |
| FAN. value (mg/100mL) | 10 | 10 | 10 |
| Conc. of sulfurous acid (ppm) | 5.2 | 7.0 | 9.2 |
| Sensory test (after storage at 28°C/1 month) | 2.4 | 1.4 | 1.2 |

As can be seen from the results shown in Table 1 above, the sulfurous acid concentration was higher in Invention Product 1 and Invention Product 2 than in Control Product 1. This indicates that the concentration of sulfurous acid in wort increases depending on the amount of zinc added as a mineral source.
Although no zinc mineral source was added to wort to make Control Product 1, Control Product 1 showed an initial zinc concentration of 0.05 ppm.

The results of the sensory test revealed that the generation of stale flavor was suppressed in Invention Product 1 and Invention Product 2 as compared to Control Product 1. These observations indicate that the addition of zinc mineral source to wort leads to an increase in the sulfurous acid concentration in wort and thereby enables the production of beer-flavored beverages having a stable flavor.

### Example 2: Effects of FAN value

A mixture of 25% malt and 75% sugar solution was used to make a wort. To this wort, an amino acid mixture was added in different amounts to make five different worts having FAN values of 30, 25, 20, 15 and 5 (mg/100L), respectively.
To each wort, zinc sulfate was added to a zinc concentration of 0.1 ppm. The zinc-containing worts were used to make a group of beer-flavored beverages (Invention Products 3 to 7). Zinc-free worts were also used to make a control group of beer-flavored beverages (Control Products 3 to 7). Each beverage was prepared in the same manner as in Example 1.
Although no zinc sulfate was added to wort to make Control Products 3 to 7, each product showed an initial zinc concentration of 0.05 ppm (As with Example 1).
As in Example 1, each test beverage was evaluated for sulfurous acid concentration and storage stability. The results are shown in Tables 2 and 3.

**(Table 2)**

| | Invention Product | | | | |
|---|---|---|---|---|---|
| | 3 | 4 | 5 | 6 | 7 |
| Zinc conc. in wort (ppm) | 0.10 | 0.10 | 0.10 | 0.10 | 0.10 |
| FAN value (mg/100mL) | 30 | 25 | 20 | 15 | 5 |
| Conc. of sulfurous acid (ppm) | 9.1 | 7.5 | 6.4 | 7.0 | 9.4 |
| Sensory test (after storage at 28°C/l month) | 1.8 | 1.5 | 1.0 | 0.8 | 0.6 |

**(Table 3)**

| | Control Product | | | | |
|---|---|---|---|---|---|
| | 3 | 4 | 5 | 6 | 7 |
| Zinc conc. in wort (ppm) | 0.05 | 0.05 | 0.05 | 0.05 | 0.05 |
| FAN value (mg/100mL) | 30 | 25 | 20 | 15 | 5 |
| Conc. Of sulfurous acid (ppm) | 4.6 | 3.5 | 3.0 | 3.5 | 4.2 |
| Sensory test (after storage at 28°C/l month) | 3.0 | 2.8 | 2.4 | 2.4 | 2.2 |

As can be seen from the results shown in Tables 2 and 3 above, the sulfurous acid concentration was higher and the flavor was more stable in Invention Products than in the corresponding Control Products having the same FAN values.
Invention Products showed increasingly higher storage stability with decreasing FAN value. The products having FAN value of 5 to 25 (mg/100mL) had particularly less stale flavor after storage and thus proved to be favorable. The beverages having FAN value of 5 to 20 (mg/100mL) scored 1.0 point or below for the stale flavor after the 1-month storage period at 28°C and proved to have particularly high flavor stability.

### Example 3: Adjustment of FAN by changing malt ratio

Two beer-flavored beverages were prepared by changing the amount of grain materials in the total carbon source. Specifically, malt and a sugar solution were used at ratios of 50:50 and 25:75 (%). A pilot-scale fermentation system was used and the mashing step was carried out at 50°C/30min and 72°C/60min. A commercially available zinc-containing dried yeast (Servomyces, Lallemand Inc.) was added to make 70 liters each of two types of wort having FAN values of 20 and 10 (mg/100mL), respectively (each contained 0.1 ppm zinc and 15% sugar).
To each wort, yeast cells (Weihenstephan 34 strain) were added at a concentration of 20 x 10⁶ cells/mL. The worts were then fermented at 15°C for 8 days. Subsequently, the yeast was removed by filtration and the resulting two fermented beverages were packaged in individual bottles.
The beverages were evaluated for sulfurous acid concentration and storage stability. The results are shown in Table 4.

**(Table 4)**

| | Invention Product 8 | Invention Product 9 |
|---|---|---|
| Zinc conc. in wort (ppm) | 0.1 | 0.1 |
| Proportion of grain material (%) | 50 | 25 |
| Proportion of sugar solution (%) | 50 | 75 , |
| FAN value (mg/100mL) | 20 | 10 |
| Conc. of sulfurous acid (ppm) | 6.6 | 7.2 |
| Sensory test (after storage at 28°C/l month) | 1.0 | 0.6 |

The results indicate that Invention Products 8 and 9 each achieved a sulfurous acid concentration in the fermented beverage of 5.0 ppm or above, which is a desired value. Each beverage scored 1.0 point or below for the stale flavor, a good enough score, after a 1-month storage period at 28°C. Invention Product 9, which contained a greater proportion of the sugar solution and thus had a lower FAN value than Invention Product 8, had a high sulfurous acid concentration and was proved to be particularly stable.
It has thus been demonstrated that by adjusting the ratio of grain materials (such as malt) to the sugar materials (such as sugar solution), the production of sulfurous acid can be enhanced and thus, stable beer-flavored beverages can be produced.

### Example 4: Adjustment of FAN value by the use of barley

A beer-flavored beverage was prepared by adjusting the FAN value by using barley in combination with malt.
Specifically, malt, barley and a sugar solution were used at a ratio of 25:15:60. A proper amount of enzyme was also added to process barley. A pilot-scale fermentation system was used and the mashing step was carried out at 50°C/30min and 72°C/60min. As in Example 3, a zinc-containing dried yeast was added to make 70 liters of a wort having FAN value of 16 (mg/100mL) (the wort contained 0.1 ppm zinc and 15% sugar).
To the resulting wort, yeast cells (Weihenstephan 34 strain) were added at a concentration of 20 x 10⁶ cells/ml. The wort was then fermented at 15°C for 8 days. Subsequently, the yeast was removed by filtration and the resulting fermented beverage was packaged in a bottle.
The beverage was then stored for 1 month at 28°C and was subjected to the sensory test. The beverage scored 1.0 point, a good enough point. The results are shown in Table 5.

**(Table 5)**

| | Invention Product 10 |
|---|---|
| Zinc conc. in wort (ppm) | 0.1 |
| Proportion of grain material (%) | 40 |
| Proportion of sugar solution (%) | 60 |
| FAN value (mg/100mL) | 16 |
| Conc. of sulfurous acid (ppm) | 6.5 |
| Sensory test (after storage at 28°C/l month) | 1.0 |

The results indicate that the FAN value can be adjusted not only by changing the amount of malt used, but also by changing the amount of barley and other grain materials. It has thus been demonstrated that by using these grain materials, the FAN value can be optimized and thus, stable beer-flavored beverages can be produced.

### INDUSTRIAL APPLICABILITY

As set forth, the present invention enables the production of beer-flavored fermented beverages with stable quality by increasing the amount of sulfurous acid produced by yeast in beer, happoshu and other fermented beverages during fermentation, rather than by adding sulfite stabilizers.
The invention therefore has a great industrial applicability
in that it offers a simple process for the production of fermented beverages that maintain their high quality for a long period of time and remain as flavorful as they are immediately after production.

## Claims

1. A process for producing a fermented beverage by fermentation of a fermentation liquid, wherein a concentration of free amino nitrogen (FAN value) in the fermentation liquid is adjusted to 25 mg/100mL or below and a mineral source is added to the fermentation liquid.

2. The process according to claim 1, wherein the FAN value in the fermentation liquid is adjusted to 5 to 20 mg/100mL.

3. The process according to claim 1, wherein a concentration of the mineral source in the fermentation liquid is 0.1 to 1.0 ppm.

4. The process according to claim 1, wherein the mineral source is zinc or a salt thereof.

5. The process according to claim 1, wherein the mineral source is zinc-containing yeast or a processed product thereof.

6. The process according to any of claims 1 to 5, wherein a concentration of sulfurous acid in the fermented beverage is increased.

7. The process according to claim 6, wherein the concentration of sulfurous acid is 5.0 ppm or above.

8. The process according to any of claims 1 to 5, wherein a proportion of grains serving as a carbon source contained in the fermentation liquid is 50% or less.

9. The process according to claim 1, wherein the fermented beverage is a beer-flavored fermented beverage.

10. The process according to claim 9, wherein the beer-flavored fermented beverage is beer, happoshu, miscellaneous alcohol beverage or low-alcohol fermented malt beverage.

11. A process for increasing a concentration of sulfurous acid in a fermented beverage produced by fermentation, wherein a mineral source is added.

12. The process according to claim 11, wherein a concentration of free amino nitrogen (FAN value) in a fermentation liquid is adjusted to 25 mg/100mL or below.

13. The process according to claim 12, wherein the FAN value in the fermentation liquid is adjusted to 5 to 20 mg/100mL.

14. The process according to claim 11, wherein a concentration of the mineral source in the fermentation liquid is 0.1 to 1.0 ppm.

15. The process according to claim 11, wherein the mineral source is zinc or a salt thereof.

16. The process according to claim 11, wherein the mineral source is zinc-containing yeast or a processed product thereof.

17. The process according to claim 11, wherein the concentration of sulfurous acid is 5.0 ppm or above.

18. The process according to claim 11, wherein a proportion of grains serving as a carbon source contained in the fermentation liquid is 50% or less.

19. The process according to claim 11, wherein the fermented beverage is a beer-flavored fermented beverage.

20. The process according to claim 19, wherein the beer-flavored fermented beverage is beer, happoshu, miscellaneous alcohol beverage or low-alcohol malt fermented beverage.

21. A fermented beverage produced by the process according to claims 1 to 10, wherein a concentration of sulfurous acid is 5.0 ppm or above.
